# EUROPEAN PATENT APPLICATION

(11) **EP 2 578 912 A2**
(43) Date of publication of application: **10.04.2013**
(21) Application number: 11786905.7
(22) Date of filing: 25.05.2011
(51) Int. Cl.: F16K 31/06, F16H 57/02, H01F 7/16

(54) **HYDRAULIC SOLENOID VALVE FOR AN AUTOMATIC TRANSMISSION OF A VEHICLE**

(30) Priority: 26.05.2010 KR 20100049236
(71) Applicant: Kefico Corporation, Gyeonggi-do 435-716 (KR)
(72) Inventor: CHEONG, Ki-Seok, Seoul 158-773 (KR); LEE, Myoung-Gil, Gunpo-si Gyeonggi-do 435-010 (KR); KANG, Hun-Cheol, Suwon-si, Gyeonggi-do 443-739 (KR); KIM, Ho-Yeon, Yongin-si, Gyonggi-do 448-539 (KR)
(74) Representative: Tischner, Oliver
(86) International application number: PCT/KR2011/003846
(87) International publication number: WO 2011/149273

(57) **Abstract**

The present invention relates to a hydraulic solenoid valve for an automatic transmission of a vehicle, which moves an armature and a spool upward or downward by means of magnetic force so as to open/shut an inlet and an outlet, characterized in that an air gap is formed between a circumferential surface of the armature and a circumferential inner surface of the movable guide body, thereby reducing mechanical processing error or assembly error, and enhancing hydraulic performance and gear shifting performance.

## Description

### Technical Field

The present invention relates to hydraulic solenoid valves for automatic transmissions of vehicles and, more particularly, to a hydraulic solenoid valve for an automatic transmission of a vehicle which is configured such that hydraulic performance and gear shifting performance can be enhanced.

### Background Art

Generally, hydraulic solenoid valves include basic elements such as a plunger and a spring and are operated depending on application of current to control the flow of fluid.

The hydraulic solenoid valves are classified into an on/off type solenoid valve and a duty type solenoid valve according to the method of operation.

The on/off type solenoid valve is repeatedly operated in such a way that when a predetermined amount of current is applied to a coil of the solenoid valve, a plunger is operated to open the valve, or when the current is interrupted, the valve is closed by the repulsive force of a spring.

Furthermore, the duty type solenoid valve is operated such that the magnitude of current is controlled to the current values of several steps to control the hydraulic pressure.

Such a conventional hydraulic solenoid valve for an automatic transmission is installed in a valve body of the automatic transmission and controls the hydraulic pressure applied to a corresponding clutch or brake when shifting gears.

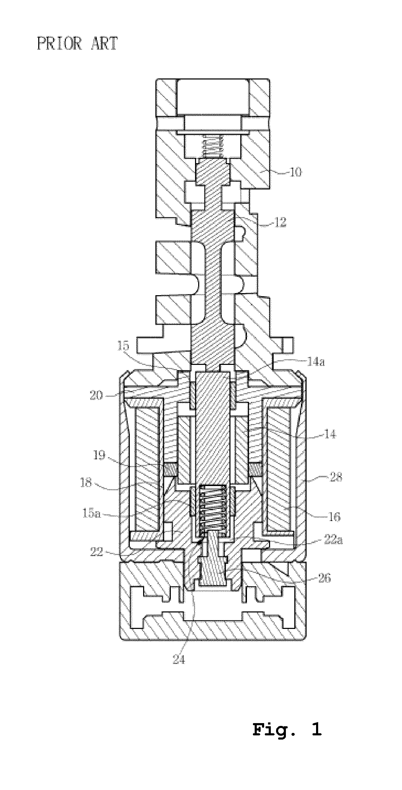

Referring to Fig. 1, in a hydraulic solenoid valve for an automatic transmission, a flange 10 that has an inlet, an outlet and a discharge hole is provided on a housing 28. A spool 12 moves upward or downward in the flange 10 and opens or closes the inlet and the outlet so that fluid is discharged out of the outlet or so that the discharge of fluid from the outlet is interrupted. Furthermore, the housing 28 contains therein a spindle 14a which is brought into close contact with a lower end of the spool 12, and an armature 14 which axially reciprocates the spindle 14a. A bushing 15 which guides the movement of the spindle 14a is disposed in magnetic elements and supports opposite ends of the spindle 14a. A bobbin 18 around which a coil 16 is wound to generate magnetic force is installed in such a shape that the bobbin 18 surrounds the armature 14.

A core 20 which connects a magnetic field generated from the coil is disposed in an upper end of the bobbin 19. A pole body 22 is provided in a lower end of the bobbin 18 in such a way that a circumferential outer surface of the pole body 22 is brought into close contact with the bobbin 18. Thus, the pole body 22 functions to pull the armature 14 when current is applied to the coil 16. A hollow hole 22a is formed in a central portion of the pole body 22. The armature 14 provided with the spindle 14a is disposed between the core 20 and the pole body 22.

Furthermore, the core 20 and the pole body 22 are magnetic elements. A ring 19 is inserted into the lower end of the bobbin 18. The core 20 is made of non-magnetic material and functions as a spacer to minimize an axial eccentric rate of the magnetic elements. The pole body 22 is provided with a bushing 15a fitted into the circumferential inner surface thereof and is assembled with the lower end of the bobbin 18. Thus, when the spindle 14a provided with the armature 14 axially reciprocates, the spindle 14a can smoothly move without there being any physical interference.

Furthermore, the hydraulic solenoid valve further includes a compression spring 24 which is disposed between the hollow hole of the pole body 22 and the lower surface of the spindle 14a provided with the armature 14 so that when current applied to the coil 16 is interrupted, the spring 24 pushes the armature 14 upward. An adjustment screw 26 supports a lower end of the compression spring 24 and is threaded into the hollow hole 22a of the pole body 22 to adjust an initial pressure at which the spool 12 opens. A housing 28 encloses a lower surface of the pole body 22, a circumferential outer surface of the coil 16 and the core 20.

The conventional hydraulic solenoid valve having the above-mentioned construction is configured such that the armature and the spindle are independently provided, thus comparatively increasing mechanical processing error and assembly error.

Furthermore, in the conventional hydraulic solenoid valve, the bushings are respectively installed in the core and the pole body so that any assembly error results in a center deviation, thus making it difficult to early ensure hydraulic performance, gear shifting performance and control pressure linearity.

To overcome the above problems, techniques in which an armature and a spindle are integrally formed to prevent mechanical processing error and assembly errors from occurring were proposed in Korean Patent Laid-open Publication No. 2005-0025273 and Japanese Patent Laid-open Publication No. 2002-222710.

The conventional solenoid valve is configured such that the armature and the spindle are integrated with each other and a coating layer made of non-magnetic material is formed on their outer surfaces to form a side air gap.

### Disclosure

### Technical Problem

Accordingly, the present invention has been made keeping in mind the above problems occurring in the prior art, and an object of the present invention is to provide a hydraulic solenoid valve for an automatic transmission of a vehicle in which bushings are coaxially provided in depressed portions formed in upper and lower ends of a pole in which an armature is installed, so that mechanical processing error and assembly error are reduced, and an air gap is formed by the bushings, thus enhancing hydraulic performance and gear shifting performance.

### Technical Solution

In order to accomplish the above obj ect, the present invention provides a hydraulic solenoid valve for an automatic transmission of a vehicle, including: a valve housing having an inlet, a control hole and an outlet in an upper portion thereof; a spool disposed in the valve housing so as to be movable vertically so that the inlet and the outlet are opened or closed depending on upward or downward movement of the spool; an armature disposed in the valve housing below the spool, the armature moving vertically using magnetic force and moving the spool vertically; a movable guide body installed in the valve housing, the movable guide body having a hollow hole in which the armature is vertically disposed so that the movable guide body guides the vertical movement of the armature; a magnetic force generation unit provided in the valve housing, the magnetic force generation unit generating magnetic force; and a first bushing member and a second bushing member disposed in the hollow hole of the movable guide body at positions spaced apart from each other in the vertical direction by a predetermined distance, the first and second bushing members being provided around the armature, wherein the movable guide body has a first bushing insert depression and a second bushing insert depression formed in a circumferential inner surface of the hollow hole at positions spaced apart from each other in the vertical direction by a predetermined distance, and the first bushing member and the second bushing member are respectively disposed in the first bushing insert depression and the second bushing insert depression, and a circumferential inner surface of the first bushing member and a circumferential inner surface of the second bushing member protrude from the circumferential inner surface of the hollow hole so that an air gap is defined between a circumferential outer surface of the armature and the circumferential inner surface of the hollow hole.

The first bushing member and the second bushing member may be coaxially disposed.

A drain hole may be formed in a lower surface of the valve housing to drain air and residual oil out of the valve housing.

The hydraulic solenoid valve may further include a stopper provided in a lower surface of the armature, the stopper being made of non-magnetic material.

A hardening layer may be formed on the surface of the armature to enhance a surface strength of the armature.

The spool may be elastically supported by a spring disposed in an upper portion of the valve housing.

The magnetic force generation unit may include: a coil assembly comprising a bobbin enclosing a circumferential outer surface of the movable guide body, and a coil wound around the bobbin; and a core unit disposed above the armature at a position spaced apart therefrom, the core unit using magnetic force generated from the coil assembly to attract the armature.

A vertical moving shaft may protrude from a lower end of the spool, the vertical moving shaft coming into contact with an upper surface of the armature, and the core unit may have a shaft hole in which the vertical moving shaft is disposed, and an insert depression formed in a lower surface of the core unit so that a portion of an upper end of the armature is inserted into the insert depression, and the vertical moving shaft may protrude into the insert depression through the shaft hole.

### Advantageous Effects

In accordance with the present invention, the number of elements that are used to electromagnetically move an armature is reduced. During an assembly process, the cumulative error, the eccentric rate, and the concentricity can be reduced.

Furthermore, in the present invention, the reduction of an air gap in the solenoid valve can increase the magnetic force. When the armature electromagnetically moves, interference and hydraulic hysteresis can be minimized.

Moreover, the present invention makes high pressure control possible and ensures a reliable hydraulic line so that gear shifting performance can be enhanced and the structure of a valve body can be simplified.

### Description of Drawings

Fig. 1 is a sectional view showing the construction of a conventional hydraulic solenoid valve for an automatic transmission of a vehicle;

Fig. 2 is a sectional view illustrating the construction of a hydraulic solenoid valve for an automatic transmission of a vehicle according to the present invention;

Fig. 3 is an enlarged view of the portion A of Fig. 2; and

Fig. 4 is a sectional view showing the operation of the hydraulic solenoid valve according to the present invention.

*Description of the elements in the drawings*

100 : valve housing 110 : base body

120 : spool guide body 200 : spool

300 : armature 310 : stopper mounting depression

400 : movable guide body 410 : hollow hole

411 : first bushing insert depression 412 : second bushing insert depression

500 : magnetic force generation unit 510 : coil assembly

520 : core unit 521 : shaft hole

522 : insert depression 600 : first bushing member

700 : second bushing member 800 : stopper

### Best Mode

Hereinafter, a preferred embodiment of the present invention will be described in detail with reference to the attached drawings.

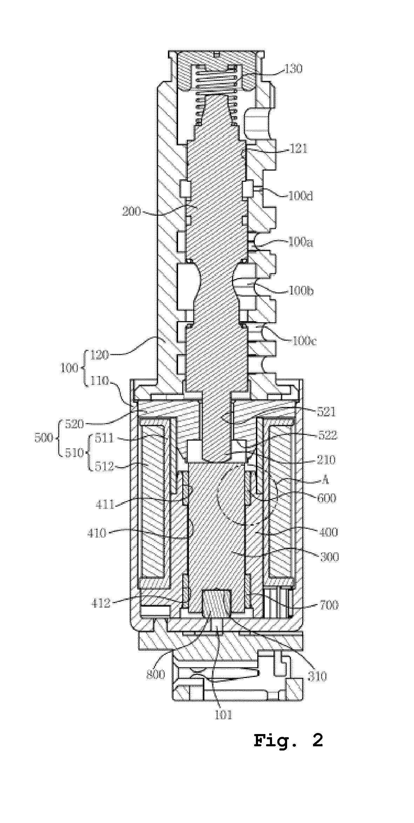

Fig. 2 is a sectional view illustrating the construction of a hydraulic solenoid valve for an automatic transmission of a vehicle according to the present invention.

Referring to Fig. 2, the hydraulic solenoid valve for the automatic transmission of the vehicle according to the present invention includes a valve housing 100 which has an inlet 100a, a control hole 100b, a feedback hole 100d and an outlet 100c. A spool 200 is disposed in the valve housing 100 so as to be movable vertically.

In detail, the spool 200 is disposed in an upper portion of the valve housing 100 so as to be movable vertically and opens or closes the inlet 100a, the control hole 100b and the outlet 100c. The inlet 100a, the control hole 100b and the outlet 100c are passages through which fluid is drawn into the valve housing 100 and the drawn fluid is transferred to a control pressure side or discharged from the valve housing 100.

The valve housing 100 includes a base body 110 and a spool guide body 120. A magnetic force generation unit 500, a movable guide body 400 and an armature 300 are installed in the base body 110. The spool guide body 120 protrudes from an upper end of the base body 110. The inlet 100a, the feedback hole 100d, the control hole 100b and the outlet 100c are formed in an outer surface of the spool guide body 120. The spool guide body 120 has therein a spool moving passage 121 which communicates with the base body 110. The spool 200 is disposed in the spool moving passage 121 so as to be movable vertically.

The spool 200 is brought into close contact with a circumferential inner surface of the spool moving passage 121 and is vertically moved in the spool guide body 120 by magnetic force to open or close the inlet 100a, the control hole 100b and the outlet 100c.

The spool 200 is elastically supported by a spring 130 which is provided in an upper end of the spool guide body 120.

The armature 300 which is vertically moved by magnetic force is disposed below the spool 200 in the base body 110. The armature 300 is moved upward by magnetic force, thus pushing a lower end of the spool 200 so that the spool 200 moves upward.

When the magnetic force is removed, the spool 200 is returned by the elastic force of the spring 130 to its original position.

The spool 200 is moved upward or downward by the generation or removal of magnetic force so that the inlet 100a, the control hole 100b and the outlet 100c are opened or closed.

It is preferable that a hardening layer be formed on a surface of the armature 300. The hardening layer increases the surface strength of the armature 300, enhancing the durability of the armature 300.

In an embodiment, the surface of the armature 300 is hardened by nitriding or carburizing to form the hardening layer.

The hydraulic solenoid valve according to the present invention further includes a stopper 800 which is installed in a lower surface of the armature 300 and is made of non-magnetic material. The stopper 800 that is made of non-magnetic material prevents the armature 300 from magnetically sticking to a lower surface of the housing during an initial operating time, thus enhancing an initial hydraulic response speed.

A stopper mounting depression 310 in which the stopper 800 is installed is formed in the lower surface of the armature 300. The stopper 800 is fitted into the stopper mounting depression 310 and mounted to the lower surface of the armature 300.

The movable guide body 400 is installed in the base body 110 to guide vertical movement of the armature 300. A hollow hole 410 is vertically formed through a central portion of the movable guide body 400 so that the armature 300 is vertically disposed in the movable guide body 400 through the hollow hole 410.

Furthermore, the magnetic force generation unit 500 which generates magnetic force is installed in the base body 110. The magnetic force generation unit 500 generates magnetic force for moving the armature 300 vertically.

The magnetic force generation unit 500 includes a coil assembly 510 and a core unit 520. The coil assembly 510 includes a bobbin 511 which encloses an outer surface of the movable guide body 400, and a coil 512 which is wound around the bobbin 511. The core unit 520 is disposed above the armature 300 at a position spaced apart therefrom and uses magnetic force generated from the coil assembly 510 to attract the armature 300.

The coil assembly 510 generates magnetic force when current is applied to the coil 512. The core unit 520 receives the magnetic force and forms a magnetic path, thus pulling the armature 300 disposed below and moving it upward. A vertical moving shaft 210 protrudes from a lower end of the spool 200 and comes into contact with an upper surface of the armature 300.

The core unit 520 has a shaft hole 521 in which the vertical moving shaft 210 is disposed. An insert depression 522 is formed in a lower surface of the core unit 520 so that a portion of an upper end of the armature 300 is inserted into the insert depression 522. The vertical moving shaft 210 protrudes into the insert depression 522 through the shaft hole 521.

The armature 300 moves upward using the magnetic force and enters the insert depression 522, thus pushing the lower end of the spool 200, that is, the vertical moving shaft 210, upward so that the spool 200 moves upward.

The insert depression 522 guides the armature 300 such that it can precisely move vertically in such a way that a portion of the upper end of the armature 300 is inserted into the insert depression 522.

Preferably, a drain hole 101 is formed in the lower surface of the valve housing 100 so that air and residual oil are drained by the drain hole 101. The drain hole 101 discharges air and residual oil from the valve housing 100, thus facilitating the assembly of the magnetic force generation unit 500, the movable guide body 400 and the armature 300 in the valve housing 100 and the operation of the armature 300.

The hydraulic solenoid valve for the automatic transmission of the vehicle according to the present invention includes a first bushing member 600 and a second bushing member 700 which are spaced apart from each other in the hollow hole 410 of the movable guide body 400 in the vertical direction by a predetermined distance.

The shape of each of the first and second bushing members 600 and 700 is that of a ring. The armature 300 is disposed in the first and second bushing members 600 and 700 so as to be movable vertically. Circumferential inner surfaces of the first and second bushing members 600 and 700 make contact with a circumferential outer surface of the armature 300 and guide vertical movement of the armature 300.

A first bushing insert depression 411 and a second bushing insert depression 412 are formed in a circumferential inner surface of the hollow hole 410 at positions spaced apart from each other in the vertical direction by a predetermined distance so that the first bushing member 600 and the second bushing member 700 are respectively disposed in the first bushing insert depression 411 and the second bushing insert depression 412.

The first bushing member 600 is installed in the first bushing insert depression 411, and the second bushing member 700 is installed in the second bushing insert depression 412.

A circumferential inner surface of the first bushing member 600 protrudes from the circumferential inner surface of the hollow hole 410, and a circumferential inner surface of the second bushing member 700 also protrudes from the circumferential inner surface of the hollow hole 410.

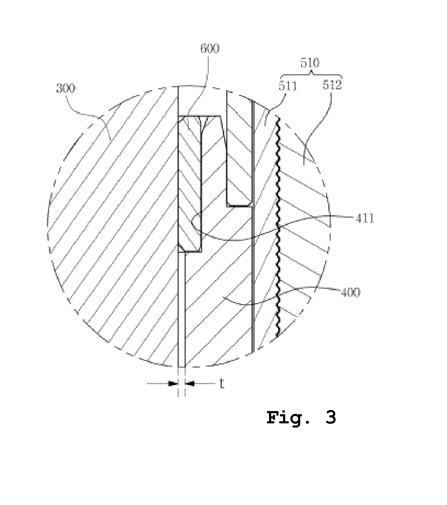

The armature 300 is disposed in and supported by the first and second bushing members 600 and 700 so as to be movable vertically. As shown in Fig. 3, an air gap t is defined between the circumferential outer surface of the armature 300 and the circumferential inner surface of the hollow hole 410.

The first bushing member 600 and the second bushing member 700 are coaxially disposed to markedly reduce mechanical processing error and assembly error.

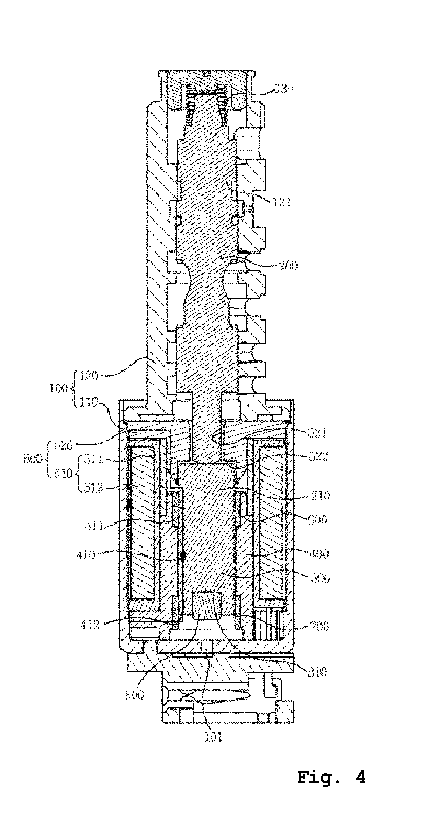

The operation of the hydraulic solenoid valve for the automatic transmission according to the present invention will be explained with reference to Fig. 4.

When current is applied to the coil 512 of the coil assembly 510, the core unit 520 pulls the armature 300 and moves it upward so that the armature 300 pushes the lower end of the spool 200 and moves the spool 200 upward.

The armature 300 moves upwards and enters the insert depression 522 of the core unit 520 so that the core unit 520 and the movable guide body 400 that have been separated from each other are connected to each other. Thereby, lines of magnetic force are maintained constant, thus enhancing the stability in the quality of magnetic characteristics.

Furthermore, because the first bushing member 600 and the second bushing member 700 are respectively installed in the first bushing insert depression 411 and the second bushing insert depression 412 and are coaxially disposed, mechanical processing error and assembly error are reduced when manufacturing or assembling the hydraulic solenoid valve.

Furthermore, the air gap t of an appropriate degree is defined between the circumferential outer surface of the armature 300 and the circumferential inner surface of the hollow hole 410 so that the hydraulic performance and the gear shifting performance can be enhanced.

In more detail, the circumferential inner surface of the first bushing member 600 and the circumferential inner surface of the second bushing member 700 protrude from the circumferential inner surface of the hollow hole 410 by about 100 µm.

Thereby, the air gap t is defined between the circumferential outer surface of the armature 300 and the circumferential inner surface of the hollow hole 410, thus preventing the armature 300 and the movable guide body 400 from magnetically sticking to each other.

Although the preferred embodiment of the present invention has been disclosed for illustrative purposes, the present invention is not limited to the embodiment, and various modifications, additions and substitutions are possible, without departing from the scope and spirit of the invention.

## Claims

1. A hydraulic solenoid valve for an automatic transmission of a vehicle, comprising:
a valve housing having an inlet, a control hole and an outlet in an upper portion thereof;
a spool disposed in the valve housing so as to be movable vertically so that the inlet and the outlet are opened or closed depending on upward or downward movement of the spool;
an armature disposed in the valve housing below the spool, the armature moving vertically using magnetic force and moving the spool vertically;
a movable guide body installed in the valve housing, the movable guide body having a hollow hole in which the armature is vertically disposed so that the movable guide body guides the vertical movement of the armature;
a magnetic force generation unit provided in the valve housing, the magnetic force generation unit generating magnetic force; and
a first bushing member and a second bushing member disposed in the hollow hole of the movable guide body at positions spaced apart from each other in the vertical direction by a predetermined distance, the first and second bushing members being provided around the armature,
wherein the movable guide body has a first bushing insert depression and a second bushing insert depression formed in a circumferential inner surface of the hollow hole at positions spaced apart from each other in the vertical direction by a predetermined distance, and the first bushing member and the second bushing member are respectively disposed in the first bushing insert depression and the second bushing insert depression, and
a circumferential inner surface of the first bushing member and a circumferential inner surface of the second bushing member protrude from the circumferential inner surface of the hollow hole so that an air gap is defined between a circumferential outer surface of the armature and the circumferential inner surface of the hollow hole.

2. The hydraulic solenoid valve for the automatic transmission of the vehicle as set forth in claim 1, wherein the first bushing member and the second bushing member are coaxially disposed.

3. The hydraulic solenoid valve for the automatic transmission of the vehicle as set forth in claim 1, wherein a drain hole is formed in a lower surface of the valve housing to drain air and residual oil out of the valve housing.

4. The hydraulic solenoid valve as set forth in claim 1, further comprising
a stopper provided in a lower surface of the armature, the stopper being made of non-magnetic material.

5. The hydraulic solenoid valve for the automatic transmission of the vehicle as set forth in claim 1, wherein a hardening layer is formed on the surface of the armature to enhance a surface strength of the armature.

6. The hydraulic solenoid valve for the automatic transmission of the vehicle as set forth in claim 1, wherein the spool is elastically supported by a spring disposed in an upper portion of the valve housing.

7. The hydraulic solenoid valve for the automatic transmission of the vehicle as set forth in claim 1, wherein the magnetic force generation unit comprises:
a coil assembly comprising a bobbin enclosing a circumferential outer surface of the movable guide body, and a coil wound around the bobbin; and
a core unit disposed above the armature at a position spaced apart therefrom, the core unit using magnetic force generated from the coil assembly to attract the armature.

8. The hydraulic solenoid valve for the automatic transmission of the vehicle as set forth in claim 7, wherein
a vertical moving shaft protrudes from a lower end of the spool, the vertical moving shaft coming into contact with an upper surface of the armature, and
the core unit has a shaft hole in which the vertical moving shaft is disposed, and an insert depression formed in a lower surface of the core unit so that a portion of an upper end of the armature is inserted into the insert depression, and
the vertical moving shaft protrudes into the insert depression through the shaft hole.
